# EUROPEAN PATENT APPLICATION

(11) **EP 4 696 652 A1**
(43) Date of publication of application: **18.02.2026**
(21) Application number: 24789068.4
(22) Date of filing: 12.04.2024
(51) Int. Cl.: C01B 32/215, H01M 4/587

(54) **METHOD OF PRODUCING PURIFIED GRAPHITE**

(30) Priority: 12.04.2023 KR 20230048378
(71) Applicant: Posco Future M Co., Ltd., Pohang-si, Gyeongsangbuk-do 37918 (KR)
(72) Inventor: KIM, Wongi, Asan-si Chungcheongnam-do 31471 (KR); KO, Seunghyun, Cheonan-si, Chungcheongnam-do 31164 (KR); NOH, Yoonsang, Sejong 30130 (KR); KOO, Yoonmo, Asan-si, Chungcheongnam-do 31471 (KR)
(74) Representative: Meissner Bolte Partnerschaft mbB
(86) International application number: PCT/KR2024/004893
(87) International publication number: WO 2024/215127

(57) **Abstract**

The present invention relates to a method for purifying graphite, which may comprise an alkali treatment step of dry-mixing a graphite material and a metal hydroxide followed by heat treatment, and an acid treatment step of subjecting the alkali-treated graphite material to acid treatment.

## Description

### [Technical Field]

The present invention relates to purification of graphite to a high purity, and more specifically, to a method for purifying graphite.

### [Background Art]

A lithium secondary battery generally comprises a positive electrode including a positive electrode active material, a negative electrode including a negative electrode active material, a separator, and an electrolyte, and is charged and discharged by insertion and deintercalation of lithium ions. The lithium secondary battery has advantages such as high energy density, high electromotive force, and the ability to exhibit high capacity, and therefore has been applied in various fields.

In particular, graphite has been widely used as a negative electrode active material for the negative electrode, and both natural graphite and artificial graphite are mainly employed. Natural graphite is one of the carbon elements existing in fossil fuels such as coal or petroleum, has a natural structure and properties, and exhibits high crystallinity and very low residual impurity content. In addition, natural graphite has very high electrical conductivity, making it useful as an anode material for batteries such as secondary batteries.

Natural graphite is extracted from graphite ore, subjected to a beneficiation process to obtain flake graphite, the extracted flake graphite is then spheroidized to produce spherical graphite, the spherical graphite is purified to a high purity to obtain refined spherical graphite, and the refined spherical graphite is coated to produce a negative electrode material. At this time, the purification of spherical graphite into high-purity graphite is typically carried out by a wet process. However, the wet process involves excessively repeated washing and filtration steps with liquids, resulting in long and complicated processing steps.

### [Detailed Description of the Invention]

### [Technical Problem]

According to one embodiment of the present invention, there is provided a method for purifying graphite that can achieve high purity while simplifying the processing steps.

### [Means for Solving the Problem]

According to one embodiment of the present invention, a method for purifying graphite may comprise an alkali treatment step of dry-mixing a graphite material and a metal hydroxide and subjecting the mixture to heat treatment, and an acid treatment step of subjecting the alkali-treated graphite material to acid treatment. In one embodiment, the metal hydroxide may have a particle size of 1 µm to 100 µm or less.

In one embodiment, the method may further comprise a step of pulverizing the metal hydroxide prior to the step of dry-mixing the graphite material and the metal hydroxide. In one embodiment, the alkali treatment step of dry-mixing the graphite material and the metal hydroxide and subjecting the mixture to heat treatment may comprise a first washing and filtration step of washing and filtering the heated mixture.

In one embodiment, in the alkali treatment step, a content ratio of the metal hydroxide to the graphite material may be from 10 to 60. In one embodiment, in the alkali treatment step, the mixture may be heated to a temperature in the range of 400°C to 600°C.

In one embodiment, in the first washing and filtration step, water in an amount of 2 to 20 times of the alkali-treated graphite material may be used. The first washing and filtration step may be performed at a temperature in the range of room temperature to 60°C.

In one embodiment, the first washing and filtration step may comprise washing the alkali-treated graphite material for 5 to 60 minutes. In one embodiment, the acid treatment step of subjecting the alkali-treated graphite material to acid treatment may be performed at a temperature in the range of room temperature to 95°C.

In one embodiment, the acid treatment step may be carried out using at least one acid selected from hydrochloric acid, nitric acid, sulfuric acid, phosphoric acid, and boric acid. In one embodiment, the acid treatment step may comprise a second washing and filtration step of washing and filtering the acid-leached product, and in the second washing and filtration step, water in an amount of 2 to 5 times of the acid-treated product may be used.

In one embodiment, the second washing and filtration step may be performed at a temperature in the range of room temperature to 60°C for 5 to 60 minutes. In one embodiment, the diluted acid used in the acid treatment step may have a concentration of 0.1 to 3.0 mol/L.

### [Effects of the Invention]

According to one embodiment of the present invention, the method for purifying graphite provides a method in which sodium hydroxide in a solid phase is dry-mixed, thereby achieving high-purity graphite through a simplified process.

### [Brief Description of Drawings]

FIG. 1 is a flowchart illustrating a method for purifying graphite according to one embodiment of the present invention.
FIG. 2 is a photograph of graphite purified according to one embodiment of the present invention.
FIG. 3 is an electron micrograph of graphite purified according to one embodiment of the present invention.

### [Mode for Carrying Out the Invention]

The terms such as first, second, and third are used merely to describe various portions, components, regions, layers, and/or sections, but are not limited thereto. These terms are used only for distinguishing one portion, component, region, layer, or section from another portion, component, region, layer, or section. Accordingly, a first portion, component, region, layer, or section described below may be referred to as a second portion, component, region, layer, or section without departing from the scope of the present invention.

Technical terminology used herein is intended merely for describing specific embodiments and is not intended to limit the present invention. Singular forms used herein include plural forms unless the context clearly indicates otherwise. The term "comprising" as used in the specification specifies the presence of stated features, regions, integers, steps, operations, elements, and/or components, but does not preclude the presence or addition of one or more other features, regions, integers, steps, operations, elements, and/or components.

When a portion is described as being "on" or "above" another portion, it may be disposed directly on or above the other portion or with another portion interposed therebetween. In contrast, when a portion is described as being "directly on" another portion, no other portion is interposed therebetween.

Unless otherwise defined, all technical and scientific terms used herein have the same meaning as commonly understood by one of ordinary skill in the art to which the present invention pertains. Terms generally defined in dictionaries are to be interpreted as consistent with the meaning in the context of the related art and the present disclosure, and are not to be interpreted in an idealized or overly formal sense unless expressly defined otherwise.

Hereinafter, embodiments of the present invention will be described in detail. However, these are merely examples, and the present invention is not limited thereby but is defined only by the scope of the claims described below.

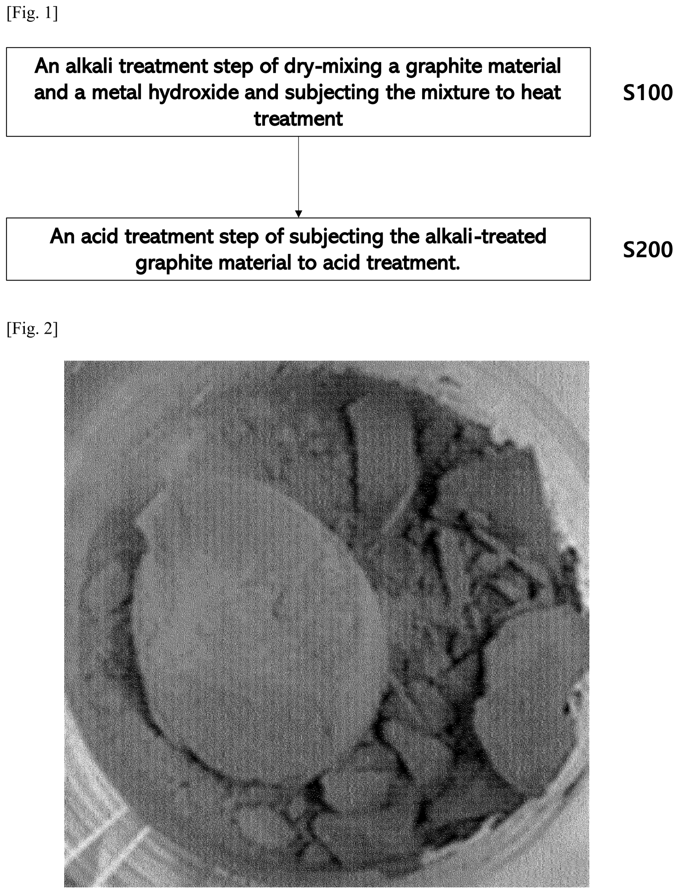

FIG. 1 is a flowchart illustrating a method for purifying graphite according to one embodiment of the present invention.

Referring to FIG. 1, the method for purifying graphite comprises an alkali treatment step (S100) of dry-mixing a graphite material and a metal hydroxide and subjecting the mixture to heat treatment, and an acid treatment step (S200) of subjecting the alkali-treated graphite material to acid treatment. More specifically, the method is intended to produce refined graphite of high purity by removing impurity contents from graphite.

The alkali treatment step (S100) of dry-mixing the graphite material and the metal hydroxide and subjecting the mixture to heat treatment may comprise: preparing the graphite material and the metal hydroxide; dry-mixing the graphite material with the metal hydroxide; and heat-treating the mixture of the graphite material and the metal hydroxide.

In the step of preparing the graphite material and the metal hydroxide, the graphite material may be in the form of graphite powder, such as earthy graphite or flake graphite, which may be prepared through pulverization, rounding, homogenization, and purification.

The metal hydroxide may be, for example, sodium hydroxide (NaOH). Specifically, the metal hydroxide may be in solid phase and in fine powder form.

In one embodiment, the method may further comprise a step of pulverizing the metal hydroxide prior to the dry-mixing step. The pulverizing step may involve crushing the solid-phase metal hydroxide into a powder form. More specifically, pulverizing may comprise applying physical or mechanical force to the solid-phase metal hydroxide to crush or grind it into a fine powder. The pulverizing may be carried out using various types of pulverizers, for example, a blade-type pulverizer.

In one embodiment, the pulverizing step may further comprise classifying the pulverized metal hydroxide. The classifying step may be carried out such that the particle size of the sodium hydroxide in solid phase is 150 µm or less, specifically from 1 to 100 µm, and more specifically from 5 to 70 µm, and the particle size may be determined by classification through sieves.

When the particle size of the solid-phase metal hydroxide exceeds the upper limit of the above range, there is a problem in that the purification effect decreases and the material aggregates and hardens after heat treatment. When the particle size of the solid-phase sodium hydroxide is below the lower limit of the above range, problems such as decreased pulverization yield and agglomeration due to moisture may occur.

The mixing step may be a step of dry-mixing the graphite material with the pulverized metal hydroxide at a predetermined ratio. The content ratio of the metal hydroxide to the graphite material may be from 5 to 50, specifically from 10 to 45. More specifically, the mixing weight ratio of the graphite material to the metal hydroxide may be from 100:15 to 100:50, and in particular from 100:17 to 100:30.

When the content of the metal hydroxide relative to the graphite material exceeds the upper limit of the above range, the obtained sample tends to agglomerate and harden after heat treatment. When the content of solid sodium hydroxide (NaOH) relative to the graphite material is below the lower limit of the above range, the purification effect of the graphite decreases.

In one embodiment, the step of mixing the graphite material and the metal hydroxide may be performed using at least one mixer selected from a ribbon mixer, a V-mixer, a screw mixer, a ball mill, a hammer mill, a stirring mill, a planetary mixer, and a roller mixer. As the graphite material and the metal hydroxide are dry-mixed, the mixing can be performed using at least one of the mixers such as the ribbon mixer, V-mixer, screw mixer, ball mill, hammer mill, stirring mill, planetary mixer, and roller mixer, and, compared with mixing viscous substances such as slurries, the use of the above mixers has advantages in energy efficiency.

For example, a viscous substance such as a slurry may be formed when the graphite material is mixed with a metal hydroxide in an aqueous solution state. In order to mix a viscous substance such as a slurry, there is a drawback in energy efficiency compared with dry mixing according to the present invention.

In the step of dry-mixing the graphite material and the metal hydroxide, the heat-treating step may include heating the mixture to a temperature in the range of 400°C to 600°C, and specifically to a temperature in the range of 440°C to 560°C. By satisfying the above temperature range, the metal hydroxide is melted and the reaction efficiency is increased. When the temperature falls outside the above range, side reactions are caused, resulting in a decrease in reaction efficiency.

In one embodiment, the heating step may be performed for 30 minutes to 10 hours. Specifically, the heating step may be performed for 1 to 8 hours. When the heating step is performed within the above temperature and time ranges, the impurities in the graphite material can appropriately react with the metal hydroxide.

In one embodiment, after the alkali treatment step, a first washing and filtration step of washing the heated mixture may be included.

In one embodiment, the first washing and filtration step of washing and filtering the heated mixture is a step of washing and filtering the heated mixture using a liquid such as water. The first washing and filtration step may involve, for example, immersing the heated mixture in hot water. Specifically, in the first washing and filtration step, washing and filtration of the heated mixture may be performed at a neutral-washing stage.

In one embodiment, in the first washing and filtration step, water in an amount of 2 to 20 times of the alkali-treated graphite material, specifically the heat-treated product, may be used. By using the water in the first washing and filtration step, washing and filtration of the graphite material are facilitated.

The step (S200) of subjecting the alkali-treated graphite material to acid treatment may be a step of applying the washed and filtered product to acid leaching. The step of acid-treating the alkali-treated graphite material may be a step of leaching the washed and filtered product with an acidic solution, for example, a diluted material comprising water and an acidic solution. For example, the acidic solution may be included at a concentration of 0.1 to 3.0 mol/L in an amount corresponding to 2.0 to 5.0 times of the graphite material in water (H₂O). The acidic solution may include, for example, at least one selected from hydrochloric acid, nitric acid, phosphoric acid, boric acid, and sulfuric acid.

In one embodiment, the step (S200) of acid-treating the alkali-treated graphite material may be performed at a temperature range of 60°C to 100°C, and specifically at a temperature range of 70°C to 90°C. In one embodiment, the step (S200) of acid-treating the alkali-treated graphite material may be performed for 5 to 60 minutes, specifically for 25 to 45 minutes. When acid leaching is performed within the above temperature and time ranges, reactivity in the acid leaching is increased so that impurities can be readily removed. When the temperature and time fall outside the above ranges, the reactivity in the acid leaching decreases, resulting in a problem that high-purity graphite cannot be obtained; although a longer leaching time affords excellent purification, the above ranges are preferable in view of economy.

In one embodiment, the step (S200) of acid-treating the alkali-treated graphite material may further comprise a second washing and filtration step of washing and filtering the acid-treated product. The second washing and filtration step of washing and filtering the acid-treated, specifically acid-leached, product may include filtering the leached product at room temperature and washing with water. Specifically, when water is used, the step may be performed using 2 to 5 times H₂O, for 5 to 60 minutes at room temperature. If necessary, heated water may be used to improve purification efficiency. By performing the washing and filtration step under the above conditions, the purification efficiency of graphite can be improved.

The refined graphite purified through the alkali treatment step (S100) of dry-mixing the graphite material and the metal hydroxide and heat-treating the mixture, and the step (S200) of acid-treating the alkali-treated graphite material, may have an ash content of 0.04 wt% or less, specifically 0.03 wt%, and more specifically 0.01 wt% or less.

As described above, the method for purifying graphite of the present invention simplifies the entire process by using solid sodium hydroxide and enables purification of graphite with high purity.

The graphite purified by the method for purifying graphite of the present invention may have an ash content, in weight percent, of 0.04 wt% or less, specifically 0.03 wt% or less, and more specifically 0.01 wt% or less. By satisfying the above ash-content range, high-purity graphite can be obtained. In one embodiment, the purified graphite may have a silicon content of 60 ppm or less in weight percent, specifically 57 ppm or less, and more specifically 30 ppm or less. In one embodiment, the purified graphite may have an aluminum content of 15 ppm or less in weight percent, specifically 12 ppm or less, and more specifically 5 ppm or less.

By satisfying the above ranges of the silicon and aluminum contents, there is an advantage in that purified graphite of high purity with low impurities can be obtained.

Hereinafter, preferred embodiments and comparative examples of the present invention will be described. However, the following embodiments are merely preferred examples of the present invention, and the present invention is not limited thereto.

### Method for Purifying Graphite

### Example 1

Solid sodium hydroxide (NaOH) beads were pulverized for 5 minutes using a blade-type pulverizer. The pulverized NaOH beads were classified with a 75 µm sieve to obtain solid sodium hydroxide (NaOH) powder having a particle size of 75 µm or less.

Spherical graphite having an average particle size (D50) of 16 µm and the classified solid NaOH powder (≤75 µm) were mixed at a mixing ratio of 100:30 under conditions of 100 RPM for 0.5 hours. Thereafter, the resulting mixture was subjected to heat treatment at 500°C for 4 hours. Subsequently, the heat-treated mixture was washed with distilled water at a graphite-to-water ratio of 1:5 at 40°C, and vacuum-filtered using filter paper and a Büchner funnel.

Thereafter, the washed and filtered material was subjected to acid leaching with hydrochloric acid at a concentration of 0.61 mol/L for 35 minutes at 80°C.

The acid-leached material was then washed and filtered at room temperature for 40 minutes using distilled water at a graphite-to-water ratio of 1:2, thereby producing purified graphite.

### Example 2

Example 1 was repeated except that the pulverized sodium hydroxide (NaOH) beads were classified with a 38 µm sieve to obtain solid sodium hydroxide (NaOH) powder having a particle size of 38 µm or less.

### Example 3

Example 2 was repeated except that the mixing ratio of graphite to NaOH powder was 100:23.

### Example 4

Example 2 was repeated except that the mixing ratio of graphite to NaOH powder was 100:17.

### Comparative Example 1 (Wet Method)

Spherical graphite having an average particle size (D50) of 16 µm was mixed with an aqueous NaOH solution (45%) at a weight ratio of graphite:45% NaOH solution = 100:66 using a planetary mixer to form a slurry. The resulting mixture was heat-treated at 500°C for 4 hours.

Subsequently, the heat-treated mixture was washed and filtered with distilled water at a graphite-to-water ratio of 1:5 under conditions of 40°C for 10 minutes.

The washed and filtered material was subjected to acid leaching with hydrochloric acid at a concentration of 0.61 mol/L for 35 minutes at 80°C. The acid-leached material was then washed and filtered with distilled water at a graphite-to-water ratio of 1:2 under conditions of room temperature for 40 minutes to obtain purified graphite.

Thereafter, an additional alkali treatment was carried out at a graphite:distilled water:NaOH aqueous solution (45%) ratio of 5:15:1 (wt%) under conditions of 80°C for 120 minutes. Subsequently, washing and filtration were further carried out at a graphite-to-water ratio of 1:5 under conditions of 80°C for 30 minutes, followed by a second acid treatment at a graphite-to-water ratio of 1:3 under conditions of 80°C for 35 minutes. The material was then washed and filtered at a graphite-to-water ratio of 2:9 under conditions of 80°C for 30 minutes to obtain purified graphite.

### Comparative Example 2

Example 1 was repeated except that solid NaOH beads having an average particle size (D50) of 0.9 mm were used without pulverization.

### Comparative Example 3

Example 1 was repeated except that the pulverized NaOH beads were classified with a 150 µm sieve to obtain solid NaOH powder having a particle size of 150 µm or less.

### Comparative Example 4

Example 1 was repeated except that the pulverized NaOH beads were classified with a 38 µm sieve to obtain solid NaOH powder having a particle size of 38 µm or less, and the mixing ratio of graphite to NaOH powder was 100:60.

### Comparative Example 5

Example 1 was repeated except that the pulverized NaOH beads were classified with a 38 µm sieve to obtain solid NaOH powder having a particle size of 38 µm or less, and the mixing ratio of graphite to NaOH powder was 100: 10.

### Evaluation Example 1: Evaluation of High-Purity Spherical Graphite

Table 1 below shows the properties of purified graphite obtained according to Examples 1 to 4 and Comparative Examples 1 to 5.

The ash content (wt%) was measured by drying a 5 g sample at 150°C for 5 hours, placing the dried sample in a crucible, heating it in a box furnace from room temperature to 950°C at a heating rate of 10°C/min, and maintaining the temperature for 12 hours. The ash content was calculated by dividing the weight of the resulting product by the weight of the initial sample.

**[Table 1]**

| | Ash (wt%) | Purification Conditions | | Remarks |
|---|---|---|---|---|
| | | Metal Hydroxide Particle Size | Mixing Ratio of Graphite to Metal Hydroxide | |
| Raw material | 3.95 | - | - | |
| Example 1 | 0.03 | Particle size <75µm | 100:30 | |
| Example 2 | 0.01 | Particle size <38µm | 100:30 | |
| Example 3 | 0.01 | Particle size <38µm | 100:23 | |
| Example 4 | 0.03 | Particle size <38µm | 100:17 | |
| Comparative Example 1 | 0.04 | Wet method | | |
| Comparative Example 2 | 0.70 | 0.9 mm | | |
| Comparative Example 3 | 0.05 | Particle size <150µm | 100:30 | |
| Comparative Example 4 | 0.01 | Particle size <38µm | 100:60 | Completely solidified |
| Comparative Example 5 | 0.08 | Particle size <38µm | 100:10 | |

Referring to Table 1, when comparing Examples 1 to 4 with Comparative Example 1, it was confirmed that when solid sodium hydroxide powder was used, purification was achieved at a higher purity than when purified using an aqueous sodium hydroxide solution. When comparing Examples 1 to 4 with Comparative Example 2, it was found that even when solid sodium hydroxide was used, if it was not pulverized and was used in a large particle size state, the purification effect was significantly reduced. When comparing Examples 1 to 4 with Comparative Example 3, it was confirmed that even when solid sodium hydroxide was pulverized, if the particle size was large, the purification effect was degraded.

In Comparative Example 4, although the particle size of sodium hydroxide was sufficiently reduced to 38 µm or less, thereby achieving a high purification effect, the excessive input amount relative to graphite caused the material to agglomerate and harden after heat treatment. In such a case, recovery of the sample becomes difficult, and the efficiency of subsequent washing, filtration, and acid leaching is greatly reduced.

In Comparative Example 5, the mixing ratio of sodium hydroxide was reduced so that the ratio of graphite to sodium hydroxide was 100:10, and it was found that the amount of sodium hydroxide was insufficient, resulting in a significant decrease in purification efficiency.

**[Table 2]**

| | Content of metal (ppm) | | | | | | | | | | | |
|---|---|---|---|---|---|---|---|---|---|---|---|---|
| | Al | Ca | Co | Cr | Cu | Fe | K | Mg | Mn | Ni | Si | Zn |
| Raw mater ial | 2,243 | 500 | 2 | 7 | 3 | 1,697 | 1,368 | 559 | 23 | 5 | 7,968 | 4 |
| Ex. 1 | 12 | 10 | 0 | 2 | 0 | 21 | 7 | 5 | 0 | 2 | 57 | 0 |
| Ex. 2 | 4 | 10 | 0 | 2 | 0 | 20 | 5 | 4 | 0 | 2 | 30 | I |
| C-Ex. 1 | 17 | 6 | 0 | 4 | 1 | 13 | 6 | 8 | 0 | 2 | 67 | 1 |
| C-Ex. 2 | 508 | 59 | 0 | 3 | 2 | 118 | 274 | 81 | 2.2 | 5 | 1561 | 1 |

Referring to Table 2, when Examples 1 and 2 were compared with Comparative Examples 1 and 2, it was confirmed that when sodium hydroxide micropowder obtained by pulverizing solid sodium hydroxide was used, the overall impurity contents such as Al, Si, Mg, and Fe were reduced to levels similar to or lower than those obtained when conventional aqueous sodium hydroxide was used. This demonstrates that the process can be simplified compared with conventional processes while increasing the purity of graphite.

FIG. 2 is a photograph of graphite purified according to the method for purifying graphite of the present invention. Referring to FIG. 2, in Example 1 of the present invention, the purified graphite was found to have low hardness after heat treatment, facilitating disintegration and easy sample discharge, thereby confirming excellent processability.

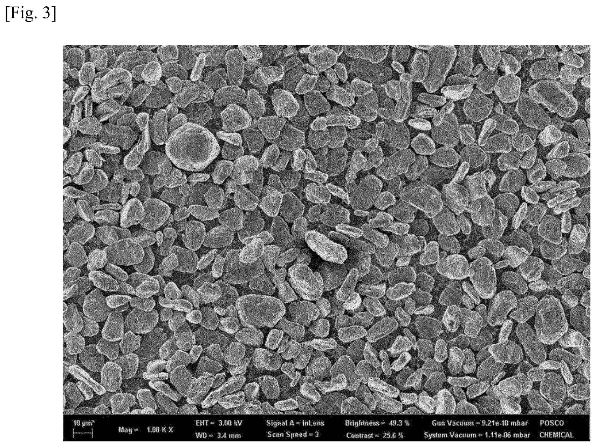

FIG. 3 is an electron micrograph of graphite purified according to the method for purifying graphite of the present invention. Referring to FIG. 3, in Example 2 of the present invention, the purified graphite was confirmed to retain the spherical graphite morphology prior to purification without structural damage.

While the preferred embodiments of the present invention have been described in detail above, the scope of the invention is not limited thereto. Various modifications and improvements utilizing the basic concepts defined in the following claims and made by those skilled in the art also fall within the scope of the present invention.

## Claims

1. A method for purifying graphite, comprising:
an alkali treatment step of dry-mixing a graphite material and a metal hydroxide and subjecting the mixture to heat treatment; and
an acid treatment step of subjecting the alkali-treated graphite material to acid treatment.

2. The method for purifying graphite of claim 1, wherein the metal hydroxide has a particle size of 1 µm to 100 µm or less.

3. The method for purifying graphite of claim 1, further comprising a step of pulverizing the metal hydroxide prior to the step of dry-mixing the graphite material and the metal hydroxide.

4. The method for purifying graphite of claim 1, wherein the alkali treatment step of dry-mixing the graphite material and the metal hydroxide and subjecting the mixture to heat treatment comprises a first washing and filtration step of washing and filtering the heated mixture.

5. The method for purifying graphite of claim 1, wherein, in the alkali treatment step, a content ratio of the metal hydroxide to the graphite material is from 10 to 60.

6. The method for purifying graphite of claim 1, wherein, in the alkali treatment step, the mixture is heated to a temperature in the range of 400°C to 600°C.

7. The method for purifying graphite of claim 4, wherein, in the first washing and filtration step, water in an amount of 2 to 20 times of the alkali-treated graphite material is used.

8. The method for purifying graphite of claim 4, wherein the first washing and filtration step is performed at a temperature in the range of room temperature to 60°C.

9. The method for purifying graphite of claim 4, wherein the first washing and filtration step comprises washing the alkali-treated graphite material for 5 to 60 minutes.

10. The method for purifying graphite of claim 1, wherein the acid treatment step of subjecting the alkali-treated graphite material to acid treatment is performed at a temperature in the range of room temperature to 95°C.

11. The method for purifying graphite of claim 1, wherein the acid treatment step is performed using at least one acid selected from hydrochloric acid, nitric acid, sulfuric acid, phosphoric acid, and boric acid.

12. The method for purifying graphite of claim 1, wherein the acid treatment step comprises a second washing and filtration step of washing and filtering the acid-leached product.

13. The method for purifying graphite of claim 12, wherein, in the second washing and filtration step, water in an amount of 2 to 5 times of the acid-treated product is used.

14. The method for purifying graphite of claim 12, wherein the second washing and filtration step is performed at a temperature in the range of room temperature to 60°C for 5 to 60 minutes.

15. The method for purifying graphite of claim 1, wherein the diluted acid used in the acid treatment step has a concentration of 0.1 to 3.0 mol/L.
